# FASCICULE DE BREVET EUROPEEN

(11) **EP 1 131 377 B1**
(45) Date de publication et mention de la délivrance du brevet: **02.07.2003**
(21) Numéro de dépôt: 00944030.6
(22) Date de dépôt: 12.07.2000
(51) Int. Cl.: C08K 5/42, C08K 5/41, B60C 1/00

(54) **ENVELOPPE DE PNEUMATIQUE DONT LES FLANCS PEUVENT COMPORTER UNE PELLICULE VERNISSEE**
REIFEN, DESSEN SEITENWÄNDE EINEN GLASIERTEN FILM ENTHALTEN
TYRE CASING WHEREOF THE SIDEWALLS CAN COMPRISE A GLAZED FILM

(30) Priorité: 12.07.1999 FR 9909140
(43) Date de publication de la demande: 12.09.2001
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: BATAILLE, François, F-63450 St-Amant-Tallende (FR); RINGOT, Claude, F-63200 Riom (FR)
(74) Mandataire: Hiebel, Robert
(86) Numéro de dépôt international: EP0006621
(87) Numéro de publication internationale: WO01004203

(56) Documents cités:
- EP-A- 0 659 826
- EP-A- 0 733 673
- EP-A- 0 869 145
- WO-A-92/15747
- US-A- 3 882 062
- US-A- 5 500 219
- US-A- 5 824 723

## Description

La présente invention concerne une enveloppe de pneumatique comportant des flancs qui comprennent une composition vulcanisée à base d'au moins un élastomère, et un procédé de formation d'une pellicule unie et vernissée sur l'un au moins desdits flancs. L'invention s'applique notamment à la protection de ladite enveloppe contre les effets des migrations d'agents anti-oxydants et anti-ozonants présents dans lesdits flancs, effets qui sont visibles sur les faces externes respectives desdits flancs.

On sait que certaines compositions de caoutchouc sont très sensibles à l'action de l'ozone. C'est en particulier le cas de compositions vulcanisées à base de d'élastomères diéniques.

Lorsqu'un article comprenant une telle composition élastomère vulcanisée est soumis à des sollicitations statiques et dynamiques prolongées en présence d'ozone, apparaissent des craquelures ou fissures plus ou moins marquées qui sont visibles à la surface de l'article. Ces craquelures sont orientées sensiblement perpendiculairement au sens de ladite contrainte, et leur propagation sous l'effet de la persistance d'une telle contrainte peut provoquer à terme la rupture complète de l'article.

Pour minimiser ces effets de l'ozone, on a prévu d'intégrer dans ces articles et, en particulier, dans les flancs à base d'élastomères que comportent les enveloppes de pneumatiques, des agents anti-ozonants qui sont destinés à réduire la formation et la propagation des craquelures dans les conditions précitées, ainsi que des cires, qui sont destinées à former un revêtement protecteur à la surface des flancs de sorte à assurer une protection complémentaire sous des sollicitations statiques.

L'association de ces agents anti-ozonants et de ces cires a prouvé son efficacité pour la minimisation des craquelures à la surface des flancs.

Malheureusement, les agents anti-ozonants les plus efficaces se caractérisent aussi par une très forte aptitude à migrer à travers le substrat élastomère et à venir tacher et colorer les surfaces adjacentes audit substrat. Plus précisément, on voit apparaître à la surface desdits flancs des taches jaunâtres ou marron. Ce phénomène est connu sous le nom de « coloration ».

De plus, il s'avère que les cires migrent également à la surface des flancs, cette migration ayant pour effet de rendre ladite surface terne et grise, voire blanchâtre. Ce phénomène est connu sous le nom d'« efflorescence ».

Le but de la présente invention est de proposer une enveloppe de pneumatique comportant des flancs qui comprennent une composition vulcanisée à base d'au moins un élastomère, qui permette de remédier aux inconvénients générés par ces phénomènes indésirables.

A cet effet, une enveloppe de pneumatique selon l'invention est telle que ladite composition comprend en combinaison:
- selon une quantité comprise entre 0,3 et 5 pce, un polymère comprenant, de part et d'autre d'un radical oxy de formule -O-, respectivement un groupe alkyle et au moins un bloc polyoxyde d'alcène qui répond à la formule (CₙH₂ₙO)_{z} et qui est relié à un atome d'hydrogène en bout de chaîne, de manière que ledit atome d'hydrogène forme une fonction alcool avec l'atome d'oxygène terminal dudit polyoxyde d'alcène, et
- selon une quantité comprise entre 0,5 et 10 pce, un sel d'un métal alcalin d'un acide alkylsulfonique ou alkylsulfurique.

L'incorporation de ce polymère et de ce sel alcalin audit ou auxdits élastomères, en vue de former ladite composition élastomère vulcanisée, permet la formation ultérieure d'une pellicule unie et vernissée sur les faces externes respectives des flancs de l'enveloppe vulcanisée, cela suite à un séjour plus ou moins prolongé dans une atmosphère dont la teneur en ozone est sensiblement d'au moins 4 parties pour cent millions, telle qu'une atmosphère urbaine moyennement polluée.

Cette pellicule unie présente l'avantage de donner auxdits flancs un aspect non taché, de telle sorte qu'il est ainsi totalement remédié aux effets indésirables précités desdits phénomènes de coloration et d'efflorescence.

De plus, ladite pellicule confère auxdits flancs un aspect vernissé, c'est-à-dire brillant comme du vernis, ce qui améliore notablement leur esthétique.

Selon un exemple de réalisation de l'invention, ledit polymère à radical oxy comprend des blocs polyoxyéthylène et polyoxypropylène.

Dans ce cas, ledit polymère à radical oxy répond par exemple à la formule:

R-O-(C₃H₆O)ₓ-(C₂H₄O)_{y}-H,

où R est un coupage de groupes alkyle ayant de 13 à 15 atomes de carbone (R a en majorité 14 atomes de carbone), la masse moléculaire dudit polymère à radical oxy allant de 500 g/mol à 1100 g/mol, x pouvant varier sensiblement de 3 à 15 et y pouvant varier sensiblement de 3 à 5.

Ce polymère à radical oxy présente avantageusement une masse moléculaire qui est sensiblement égale à 670 g/mol (dans ce cas, x est égal ou sensiblement égal à 5 et y est égal ou sensiblement égal à 4), ou à 510 g/mol (dans ce cas, x et y sont chacun égaux ou sensiblement égaux à 3), ou encore à 1050 g/mol (dans ce dernier cas, x est égal ou sensiblement égal à 15 et y est égal ou sensiblement égal à 4).

De préférence, ledit polymère à radical oxy est présent dans ladite composition selon une quantité sensiblement égale à 2 pce.

Selon un exemple de réalisation de l'invention, ledit sel d'un métal alcalin est un sel de sodium présent dans ladite composition selon une quantité sensiblement égale à 5 pce, et répondant à la formule:

R'-SO_{z}-Na,

où R' est un coupage de groupes alkyle ayant de 3 à 17 atomes de carbone, et z est un nombre entier égal à 3 ou 4.

Dans le cas où ledit sel répond à la formule R'-SO₃-Na, R' peut avoir par exemple en majorité 8 atomes de carbone ou bien 15 atomes de carbone.

Dans le cas où ledit sel répond à la formule R'-SO₄-Na, R' peut avoir par exemple en majorité 8 atomes de carbone ou bien 13 atomes de carbone.

Selon une autre caractéristique de l'invention, ladite composition élastomère comprend au moins un agent anti-ozonant et/ou au moins un agent anti-oxydant.

Ledit agent anti-ozonant appartient par exemple au groupe constitué par la 2, 4, 6- tris (N-1, 4- diméthyl pentyl -p- phénylène diamino) 1, 3, 5 triazine et la N, N' di (1, 4 diméthylpentyl)-p-phénylènediamine.

Quant audit agent anti-oxydant, il est par exemple constitué de N-(1, 3-diméthyl butyl)-N'-phényl-p-phénylène diamine.

Un procédé selon l'invention pour la formation d'une pellicule unie et vernissée sur la face externe de l'un au moins des flancs d'une enveloppe de pneumatique, consiste à utiliser une enveloppe selon l'invention telle que définie ci-dessus, et à exposer d'une manière statique pendant au moins 48 heures, dans une enceinte maintenue à une température sensiblement égale ou supérieure à 25° C, ledit ou chaque flanc à un environnement d'ozone qui est tel que la concentration d'ozone dosée dans l'air ambiant est sensiblement égale ou supérieure à 20 parties pour cent millions, pour la formation de ladite pellicule avec pour celle-ci une épaisseur obtenue sensiblement égale ou supérieure à 0,5 microns.

A titre préférentiel, ladite concentration d'ozone dosée dans l'air ambiant est sensiblement égale ou supérieure à 40 parties pour cent millions.

Cette pellicule présente également l'avantage de donner auxdits flancs un aspect non taché, de sorte qu'il est remédié de la même manière aux effets indésirables précités, avec l'obtention d'un aspect brillant pour ledit ou chaque flanc.

Les caractéristiques précitées de la présente invention, ainsi que d'autres, seront mieux comprises à la lecture de la description suivante de plusieurs exemples de réalisation de l'invention, donnés à titre illustratif et non limitatif.

Dans les exemples qui suivent, les masses moléculaires ont été mesurées par la technique de tonométrie, au moyen d'un osmomètre à tension de vapeur commercialisé sous la dénomination « WESCAN modèle 232A ». Pour ces mesures, on a utilisé du toluène « RP » à titre de solvant, et une température de mesure égale à 50° C.

### EXEMPLE TEMOIN

On a utilisé, pour une composition de caoutchouc vulcanisée destinée à constituer les flancs d'une enveloppe de pneumatique « témoin », la formulation de mélangeage suivante, en parties en poids pour cent parties d'élastomère (pce):

| | |
|---|---|
| gomme naturelle | 35 pce |
| polybutadiène | 65 pce |
| noir de carbone N660 | 60 pce |
| huile aromatique | 20 pce |
| « 6PPD » | 3 pce |
| « Durazone 37 » | 0,5 pce |
| soufre | 1,5 pce |
| « CBS » | 1 pce |
| oxyde de zinc | 3 pce |
| acide stéarique | 1 pce, |

où
la « 6PPD » est la N-(1,3-diméthyl butyl)-N'-phényl-p-phénylènediamine, agent à la fois anti-oxydant et anti-ozonant,
la « Durazone 37 » est la dénomination commerciale d'un agent anti-ozonant constitué d'une triazine tri-substituée para phénylène diamine, dont le nom est la 2, 4, 6- tris (N-1, 4-diméthyl pentyl -p- phénylène diamino) 1, 3, 5 triazine, et
la « CBS » est la N-cyclohexyl-benzothiazyl-sulfénamide, accélérateur de vulcanisation.

On observe au bout d'un certain temps, sur la face externe de chaque flanc de cette enveloppe témoin, des taches jaunes et marron et un aspect général mat, en raison de la migration des agents anti-oxydant et anti-ozonant.

### EXEMPLES 1 à 16 SELON L'INVENTION

### EXEMPLE 1:

On a ajouté à la composition de caoutchouc répondant à la formulation dudit exemple témoin, pour l'opération de mélangeage à l'état non vulcanisé:
- un agent anti-statique A commercialisé par la société CLARIANT sous la dénomination HOSTASTAT HS1, selon un taux de 5 pce.

Il s'agit d'un sel de sodium d'un acide alkylsulfonique répondant à la formule R-SO₃-Na, où R est un coupage de groupes alkyl ayant respectivement de 3 à 17 atomes de carbone, et ayant en majorité 15 atomes de carbone; et
- un agent tensio-actif B commercialisé par la société ICI sous la dénomination SYNPEROMC LF/RA 280, selon un taux de 2 pce.

Il s'agit d'un polymère comprenant, de part et d'autre d'un radical oxy de formule -O-, respectivement un coupage R de groupes alkyle ayant de 13 à 15 atomes de carbone, et des blocs polyoxyéthyiène et polyoxypropylène, selon la formule:

R-O-(C₃H₆O)₅-(C₂H₄O)₄-H,

Plus précisément, le bloc polyoxyéthylène est relié à un atome d'hydrogène en bout de chaîne, de manière que ce dernier forme une fonction alcool avec l'atome d'oxygène terminal dudit bloc polyoxyéthylène.

La masse moléculaire de cet agent tensio-actif B, mesurée par la technique précitée de tonométrie, est sensiblement de 670 g/mol.

### EXEMPLES 2 A 7:

Dans chacun des exemples 2 à 7, on a remplacé les 0,5 pce de « Durazone 37 » (utilisés dans ledit exemple témoin) par 1 pce d'un autre agent anti-ozonant qui est commercialisé sous la dénomination « Santoflex 77 » et qui est la N, N' di (1, 4 diméthylpentyl)-p-phénylènediamine. Cette nouvelle formulation de base sert de référence aux exemples 2 à 7 suivants.

### Exemple 2:

On a ajouté à cette formulation de base, pour l'opération de mélangeage à l'état non vulcanisé:
- l'agent anti-statique A « HOSTASTAT HS1 » de l'exemple 1, selon le même taux de 5 pce,
- l'agent tensio-actif B « SYNPERONIC LF/RA 280 » de l'exemple 1, selon le même taux de 2 pce.

### Exemple 3:

On a ajouté à ladite formulation de base, pour l'opération de mélangeage à l'état non vulcanisé:
- l'agent anti-statique A « HOSTASTAT HS1 » de l'exemple 1, selon le même taux de 5 pce,
- un agent tensio-actif B commercialisé par la société ICI sous la dénomination SYNPERONIC LF/RA 260, selon un taux de 2 pce. Il s'agit d'un polymère comprenant, de part et d'autre d'un radical oxy de formule -O-, respectivement un coupage R de groupes alkyle ayant de 13 à 15 atomes de carbone, et des blocs polyoxyéthylène et polyoxypropylène, selon la formule:

   R-O-(C₃H₆O)ₓ-(C₂H₄O)_{y}-H,
avec x et y étant chacun égaux ou sensiblement égaux à 3.

La masse moléculaire de ce nouvel agent tensio-actif B, mesurée par la technique précitée de tonométrie, est sensiblement de 510 g/mol.

### Exemple 4:

On a ajouté à ladite formulation de base, pour l'opération de mélangeage à l'état non vulcanisé:
- l'agent anti-statique A « HOSTASTAT HS1 » de l'exemple 1, selon le même taux de 5 pce,
- un agent tensio-actif B commercialisé par la société ICI sous la dénomination SYNPERONIC LF/RA 310, selon un taux de 2 pce. Il s'agit d'un polymère comprenant, de part et d'autre d'un radical oxy de formule -O-, respectivement un coupage R de groupes alkyle ayant de 13 à 15 atomes de carbone, et des blocs polyoxyéthylène et polyoxypropylène, selon la formule:

   R-O-(C₃H₆O)ₓ-(C₂H₄O)_{y}-H,
avec x égal ou sensiblement égal à 15 et y égal ou sensiblement égal à 4.

La masse moléculaire de ce nouvel agent tensio-actif B, mesurée par la technique précitée de tonométrie, est sensiblement de 1050 g/mol.

### Exemple 5:

On a ajouté à ladite formulation de base, pour le mélangeage à l'état non vulcanisé:
- un agent anti-statique A constitué d'un octanesulfonate de sodium commercialisé par la société STEPAN sous la dénomination « BIO-TERGE PAS-8 S » et que l'on a séché au préalable, selon un taux de 5 pce,
- l'agent tensio-actif B « SYNPERONIC LF/RA 280 » de l'exemple 1, selon le même taux de 2 pce.

### Exemple 6:

On a ajouté à ladite formulation de base, pour le mélangeage à l'état non vulcanisé:
- un agent anti-statique A constitué d'un octylsulfate de sodium commercialisé par la société RHODIA sous la dénomination « RHODAPON OLS » et que l'on a séché au préalable, selon un taux de 5 pce,
- l'agent tensio-actif B « SYNPERONIC LF/RA 280 » de l'exemple 1, selon le même taux de 2 pce.

### Exemple 7:

On a ajouté à ladite formulation de base, pour l'opération de mélangeage à l'état non vulcanisé:
- un agent anti-statique A constitué d'un tridécylsulfate de sodium commercialisé par la société RHODIA sous la dénomination « RHODAPON TDS » et que l'on a séché au préalable, selon un taux de 5 pce,
- l'agent tensio-actif B « SYNPERONIC LF/RA 280 » de l'exemple 1, selon le même taux de 2 pce.

### EXEMPLES 8 A 16:

Pour tous ces exemples 8 à 16, on a ajouté à la composition de caoutchouc répondant à la formulation dudit exemple témoin, à l'exception des taux utilisés de « 6PPD » et de « Durazone 37 » (taux différents spécifiés ci-après), pour le mélangeage à l'état non vulcanisé:
- ledit agent anti-statique A commercialisé sous la dénomination « HOSTASTAT HS1 », selon des taux compris entre 0,5 et 10 pce et
- ledit agent tensio-actif B commercialisé sous la dénomination « SYNPERONIC LF/RA 280 » selon un taux compris entre 0,3 et 5 pce,

Le tableau ci-après rend compte des taux d'agents anti-statique A, tensio-actif B, « 6PPD» et « Durazone 37 » utilisés pour chacun de ces exemples 8 à 16.

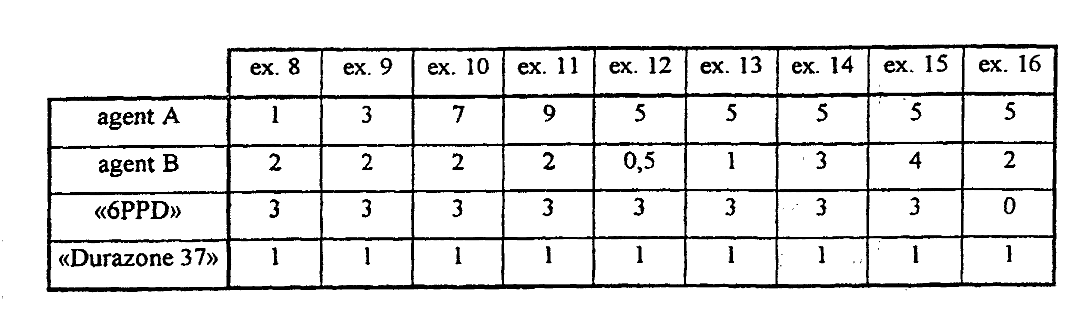

### PLACEMENT EN ATMOSPHERE PLUS OU MOINS RICHE EN OZONE DE COMPOSITIONS DE CAOUTCHOUC VULCANISEES SELON L'UN OU L'AUTRE DES EXEMPLES 1 A 16 SELON L'INVENTION:

1) Selon un premier mode de placement, on a placé dans des conditions statiques les enveloppes vulcanisées respectivement obtenues selon les exemples 1 à 16 dans une atmosphère extérieure de type urbaine, à 20° C et à l'abri du soleil et de la pluie. Cette atmosphère est telle que la concentration d'ozone dosée dans l'air atmosphérique est sensiblement de 4 parties pour cent millions. Ce placement a été réalisé de sorte à exposer chaque flanc à cette atmosphère ouverte, cela pendant une durée de 2 mois.
   De manière surprenante, on a observé au terme de ce placement et sur la face externe de chaque flanc la présence d'une pellicule unie et vernissée, c'est-à-dire brillante ou luisante comme du vernis. Plus précisément, cette pellicule présentait environ 0,8 µm d'épaisseur en moyenne. Aucune tache, souillure ou zone terne n'était visible sur les flancs, contrairement à l'exemple témoin.
2) Selon un second mode de placement, on a placé dans des conditions statiques les enveloppes vulcanisées selon les exemples 1 à 16 dans une atmosphère extérieure de type urbaine, à 25° C et à l'abri du soleil et de la pluie. Cette atmosphère est également telle que la concentration d'ozone dosée dans l'air atmosphérique est proche de 4 parties pour cent millions. Ce placement a été réalisé de sorte à exposer chaque flanc à cette atmosphère ouverte, cette fois pendant une durée de 5 mois.
   Comme dans ledit premier mode, on a observé au terme de ce placement la présence d'une pellicule vernissée d'épaisseur moyenne également proche de 0,8 µm, de telle sorte que les flancs étaient totalement exempts de taches et présentaient un aspect brillant.
3) Selon un troisième mode de placement, on a placé dans des conditions statiques les enveloppes vulcanisées selon les exemples 1 à 16 dans une enceinte d'ozonation, constituée d'une chambre fermée dont la concentration d'ozone dosée dans l'air était d'environ 40 parties pour cent millions et dont la température intérieure était de 25° C. Ce placement a été réalisé de sorte à exposer chaque flanc à cette atmosphère fermée, cela pendant une durée de 7 jours.
   Comme dans ledit premier mode, on a observé au terme de ce placement la présence d'une pellicule unie et vernissée d'épaisseur moyenne également proche de 1 µm, de telle sorte que les flancs étaient totalement exempts de taches et présentaient un aspect brillant.
4) Selon un quatrième mode de placement, on a placé dans des conditions statiques les enveloppes vulcanisées selon les exemples 1 à 16 dans une enceinte d'ozonation, constituée d'une chambre fermée dont la concentration d'ozone dosée dans l'air était cette fois d'environ 50 parties pour cent millions et dont la température intérieure était de 38° C. Ce placement a été réalisé de sorte à exposer chaque flanc à cette atmosphère fermée, cela pendant une durée de 24 ou de 72 heures.
   Comme précédemment, on a observé au terme de ce placement la présence d'une pellicule unie et vernissée d'épaisseur moyenne également proche de 1 µm, de telle sorte que les flancs étaient totalement exempts de taches et présentaient un aspect brillant.
5) Selon un cinquième mode de placement, on a placé dans des conditions statiques les enveloppes vulcanisées selon les exemples 1 à 16 dans une enceinte d'ozonation, constituée d'une chambre fermée dont la concentration d'ozone dosée dans l'air était d'environ. 200 parties pour cent millions et dont la température intérieure était de 25° C. Ce placement a été réalisé de sorte à exposer chaque flanc à cette atmosphère fermée, cela pendant une durée de 48 heures.
   Comme précédemment, on a observé au terme de ce placement la présence d'une pellicule unie et vernissée d'épaisseur moyenne égale à 1,5 µm, de telle sorte que les flancs étaient totalement exempts de taches et présentaient un aspect brillant.
6) Selon une variante de chacun de ces modes de placement, on a placé à l'air libre et dans des conditions statiques les enveloppes ayant subi le traitement d'ozonation en enceinte suivant chacun des trois derniers modes précités, dans les conditions spécifiées auxdits premier et second modes.
   On a abouti aux mêmes résultats de flancs recouverts d'une pellicule vernissée, avec une épaisseur moyenne proche de 1,5 µm.

Pour chacune des enveloppes ayant été placée selon l'un ou l'autre des 6 modes précités, on a procédé aux tests qualitatifs suivants d'évaluation des performances.
- "coloration/efflorescence": test de l'aptitude des pellicules vernissées ainsi formées à s'opposer aux effets des phénomènes précités de coloration et d'efflorescence, dûs aux migrations en surface des agents anti-ozonants;
- "tenue en dynamique": test de la résistance mécanique desdites pellicules sous sollicitation dynamique, consistant à parcourir 12 000 kilomètres sur une rouleuse avec une flèche imposée de 35 % à 60 kilomètres par heure, ce test imposant une déformation dynamique en surface des flancs de l'ordre de 15 % d'extension;
- "râpage trottoir": frottement des flancs pourvu desdites pellicules contre un trottoir pendant quelques mètres pour déterminer un éventuel décollement ou une disparition de celles-ci;
- "eau" : test de la résistance desdites pellicules lors d'une immersion de 4 heures dans de l'eau; il s'agit d'une simulation d'un stationnement de longue durée d'un véhicule sur une flaque d'eau d'un parking, par exemple;
- "lavage" : test de la résistance desdites pellicules au lavage par frottement avec une solution aqueuse comportant du savon.

Les résultats obtenus sont présentés dans le tableau ci-après.

| | |
|---|---|
| coloration/efflorescence | aucune, aspect uni et vernissé |
| tenue en dynamique | maintien de la pellicule unie et vernissée |
| râpage trottoir | disparition de la pellicule |
| eau | altération progressive de la pellicule |
| lavage | disparition de la pellicule |

On notera que les pellicules immergées dans de l'eau ne disparaissent que très progressivement dans le temps.

On a par ailleurs soumis à une ozonation des « éprouvettes » qui comprennent respectivement les compositions vulcanisées selon les exemples 1 à 16 selon l'invention, en suivant le quatrième mode de placement précité (dans une enceinte contenant 50 parties pour cent millions d'ozone, à 38° C, pendant 24 heures et avec une déformation statique de surface sous extension de 18 %).

On a procédé à des mesures de degré de brillance de ces « éprouvettes » 1 à 16, de sorte à caractériser objectivement la nature vernissée des pellicules ainsi obtenues.

A cet effet, on a utilisé pour ces « éprouvettes » des plaques de caoutchouc vulcanisées au moyen d'un moule dit « téflonné puis traitées à l'ozone comme indiqué ci-dessus, chacune étant constituée d'un empilement de deux demi-plaques. Chaque demi-plaque présente une hauteur de 1,5 mm, une longueur de 15 cm et une largeur de 14 cm.

Chaque plaque supérieure est constituée d'un mélange pour flancs selon l'un ou l'autre des exemples 1 à 16. Quant à chaque plaque inférieure, elle est constituée d'un mélange pour flancs selon ledit exemple témoin.

Cette vulcanisation en moule « téflonné » a été réalisée en vue de l'obtention pour chaque demi-plaque d'un état de surface déterminé qui caractérise donc à la fois la composition témoin et à la composition selon l'invention et qui, par conséquent, conditionne lesdites mesures de brillance recherchées.

Ce moule « téflonné » est défini, d'une part, par l'acier le constituant qui répond à la dénomination Z3 CN 18-10 (nomenclature AFNOR) et, d'autre part, par le traitement par jets de projectiles suivi d'un « téflonnage » qu'on lui fait subir.

Ce traitement par jets de projectiles est destiné à l'obtention d'une valeur de rugosité Ra (écart moyen arithmétique du profil) déterminée, qui est comprise entre 2 et 4 µm.

On utilise, pour toutes les mesures de rugosité, un rugosimètre commercialisé sous la dénomination « MITOTUYO, série SURTRONIC ».

Plus précisément, la longueur Lₘ d'évaluation des rugosités sur les plaques est choisie égale à 4 mm, et la longueur élémentaire (seuil de mesure Lₑ par le capteur du rugosimètre, ou cut-off) est choisie égale à 0,8 mm. De plus, le filtre utilisé par cette longueur élémentaire est du type « pc50 », avec une grandeur f= 5 µm.

Concernant ledit capteur, il s'agit d'un capteur de type diamant et sa vitesse de déplacement est de 0,25 mm/s.

On opère ce traitement de jets de projectiles à une pression de 3 bar, à une distance de jets égale à 10 cm et selon une incidence normale. Les projectiles utilisés sont constitués de particules de corindon blanc (alumine), qui présentent une dimension moyenne de 80 µm et une dimension normalisée de 150 mesh (selon la norme NF XII- 508).

Le traitement ultérieur de « téflonnage » consiste:
- dans une première étape, à pulvériser du polytétrafluoroéthylène sur la face interne de la paroi du moule, de sorte à obtenir une épaisseur de 10 à 15 µm de pulvérisat sur ladite face. On procède ensuite à un séchage à 250° C pendant 5 minutes, puis à un refroidissement, et
- dans une seconde étape, à pulvériser à nouveau du polytétrafluoroéthylène sur ladite face interne, pour obtenir une épaisseur de 5 à 10 µm de pulvérisat sur ladite face. On procède ensuite à un séchage à 110° C pendant 5 minutes, suivi d'un cuisson à 390° C pendant 45 minutes, puis à un refroidissement.

Finalement, on obtient pour la face interne de la paroi du moule, une valeur de rugosité Ra qui est comprise entre 0,5 et 1,2 µm, laquelle plage détermine ainsi un état de surface déterminé pour les deux demi-plaques vulcanisées et traitées à l'ozone, en vue des mesures de brillance.

Ces dernières sont effectuées au moyen d'un reflectomètre commercialisé sous la dénomination « TRI-gloss BYK Gardner ». Cet appareil satisfait à la norme ASTM D523 ou ISO 2813.

On a observé pour toutes les « éprouvettes » 1 à 16 la présence d'une pellicule unie et vernissée les rendant totalement exemptes de taches et leur conférant un aspect brillant.

Le tableau ci-après rend compte, pour trois angles d'incidence différents, des résultats de degré de brillance obtenus pour les compositions vulcanisées et traitées à l'ozone selon les exemples 1 à 16 de l'invention, en comparaison d'une variante de composition vulcanisée témoin « T », qui diffère uniquement de celle dudit exemple témoin en ce qu'elle ne comporte pas de « Durazone 37 » (la composition vulcanisée « T » a été soumise à une ozonation en enceinte dans des conditions identiques à celles des exemples 1 à 16, c'est-à-dire en suivant le quatrième mode de placement précité).

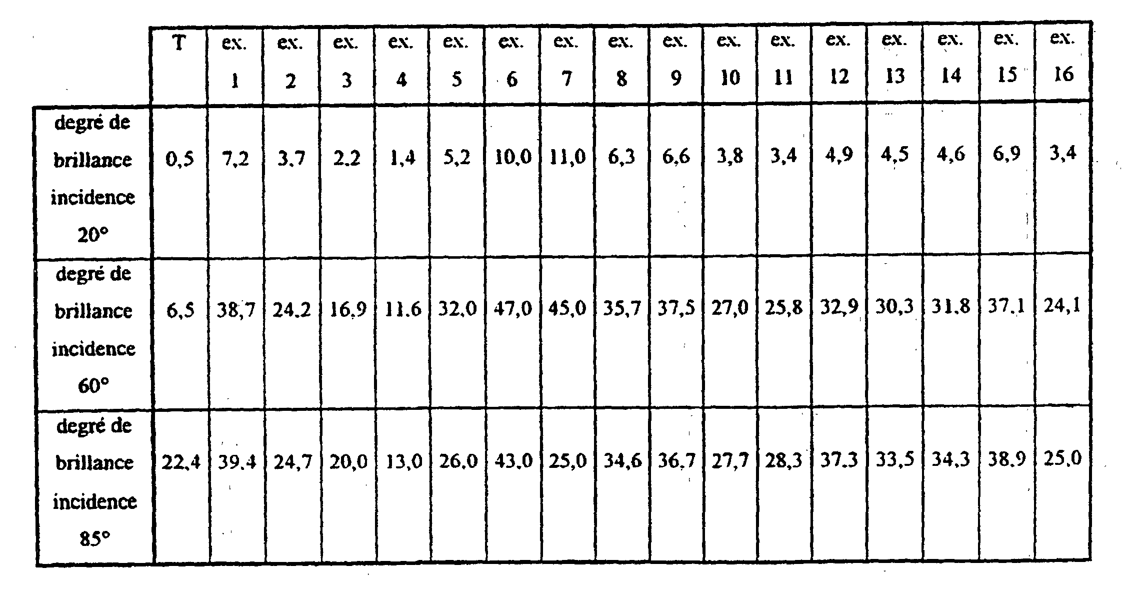

Ce tableau montre que la pellicule formée au moyen de compositions selon l'invention soumises à l'ozonation précitée présente une nature vernissée, c'est-à-dire qu'elle est caractérisée par une réflexion spéculaire élevée lui conférant ce degré de brillance plus ou moins intense, contrairement à la composition témoin « T » qui est caractérisée par une réflexion diffuse lui conférant une matité usuelle.

A titre de comparaison de l'aspect vernissé de la pellicule obtenue selon l'invention avec des pellicules connues pour faire briller les flancs, pellicules qui ne se forment pas à la surface de ces derniers comme dans l'invention mais qui sont constituées d'un vernis, c'est-à-dire d'une solution que l'on applique sur lesdits flancs, on peut citer le vernis commercialisé sous la dénomination « LYNDCOAT BR 790 » par la société Rhône-Poulenc. Ce vernis présente en effet un degré de brillance d'un même ordre de grandeur que la pellicule vernissée selon l'invention, cela dans des conditions de mesure analogues à partir d'un état de surface proche de celui choisi pour les mesures de brillance précitées.

On notera que les pellicules vernissées dont sont pourvues les enveloppes selon l'invention sont telles qu'elles laissent apparaître nettement les différents marquages usuellement apposés sur les flancs, lors de leur confection et lors de tests ultérieurs. Avantageusement, on observe même que du fait de la présence de cette pellicule, les marquages de flancs sont visibles avec un contraste supérieur par rapport au reste de la face externe desdits flancs.

On notera également que les pellicules vernissées des enveloppes selon l'invention demeurent pratiquement intactes après utilisation en roulage.

## Revendications

1. Enveloppe de pneumatique comportant des flancs qui comprennent une composition vulcanisée à base d'au moins un élastomère, **caractérisée en ce que** ladite composition comprend en combinaison:
- selon une quantité comprise entre 0,3 et 5 pce, un polymère comprenant, de part et d'autre d'un radical oxy de formule -O-, respectivement un groupe alkyle et au moins un bloc polyoxyde d'alcène qui répond à la formule (CₙH₂ₙO)_{z} et qui est relié à un atome d'hydrogène en bout de chaîne, de manière que ledit atome d'hydrogène forme une fonction alcool avec l'atome d'oxygène terminal dudit polyoxyde d'alcène, et
- selon une quantité comprise entre 0,5 et 10 pce, un sel d'un métal alcalin d'un acide alkylsulfonique ou alkylsulfurique.

2. Enveloppe de pneumatique selon la revendication 1, **caractérisée en ce que** ledit polymère à radical oxy comprend des blocs polyoxyéthylène et polyoxypropylène.

3. Enveloppe de pneumatique selon la revendication 2, **caractérisée en ce que** ledit polymère à radical oxy répond à la formule:
R-O-(C₃H₆O)ₓ-(C₂H₄O)_{y}-H,
où R est un coupage de groupes alkyle ayant de 13 à 15 atomes de carbone, la masse moléculaire dudit polymère à radical oxy allant de 500 g/mol à 1100 g/mol.

4. Enveloppe de pneumatique selon la revendication 3, **caractérisée en ce que** ledit polymère à radical oxy est tel que x varie sensiblement de 3 à 15 et y varie sensiblement de 3 à 5.

5. Enveloppe de pneumatique selon la revendication 3 ou 4, **caractérisée en ce que** ledit polymère à radical oxy présente une masse moléculaire qui est sensiblement égale à 670 g/mol.

6. Enveloppe de pneumatique selon la revendication 5, **caractérisée en ce que** ledit polymère à radical oxy est tel que x est égal ou sensiblement égal à 5 et y est égal ou sensiblement égal 4.

7. Enveloppe de pneumatique selon la revendication 3 ou 4, **caractérisée en ce que** ledit polymère à radical oxy présente une masse moléculaire qui est sensiblement égale à 510 g/mol.

8. Enveloppe de pneumatique selon la revendication 7, **caractérisée en ce que** ledit polymère à radical oxy est tel que x est égal ou sensiblement égal à 3 et y-est égal ou sensiblement égal à 3.

9. Enveloppe de pneumatique selon la revendication 3 ou 4, **caractérisée en ce que** ledit polymère à radical oxy présente une masse moléculaire qui est sensiblement égale à 1050 g/mol.

10. Enveloppe de pneumatique selon la revendication 9, **caractérisée en ce que** ledit polymère à radical oxy est tel que x est égal ou sensiblement égal à 15 et y est égal ou sensiblement égal à 4.

11. Enveloppe de pneumatique selon une des revendications précédentes, **caractérisée en ce que** ledit polymère à radical oxy est présent dans ladite composition selon une quantité sensiblement égale à 2 pce.

12. Enveloppe de pneumatique selon une des revendications précédentes, **caractérisée en ce que** ledit sel d'un métal alcalin est un sel de sodium répondant à la formule:
R'-SO_{z}-Na,
où R' est un coupage de groupes alkyle ayant de 3 à 17 atomes de carbone, et z est un nombre entier égal à 3 ou à 4.

13. Enveloppe de pneumatique selon la revendication 12, **caractérisée en ce que** ledit sel répond à la formule R'-SO₃-Na.

14. Enveloppe de pneumatique selon la revendication 13, **caractérisée en ce que** R' a en majorité 8 atomes de carbone.

15. Enveloppe de pneumatique selon la revendication 13, **caractérisée en ce que** R' a en majorité 15 atomes de carbone.

16. Enveloppe de pneumatique selon la revendication 12, **caractérisée en ce que** ledit sel répond à la formule R'-SO₄-Na.

17. Enveloppe de pneumatique selon la revendication 16, **caractérisée en ce que** R' a en majorité 8 atomes de carbone.

18. Enveloppe de pneumatique selon la revendication 16, **caractérisée en ce que** R' a en majorité 13 atomes de carbone.

19. Enveloppe de pneumatique selon une des revendications précédentes, **caractérisée en ce que** ledit sel est présent dans ladite composition selon une quantité sensiblement égale à 5 pce.

20. Enveloppe de pneumatique selon une des revendications précédentes, **caractérisée en ce que** ladite composition élastomère comprend au moins un agent anti-ozonant et/ou au moins un agent anti-oxydant.

21. Enveloppe de pneumatique selon la revendication 20, **caractérisée en ce que** ledit agent anti-ozonant appartient au groupe constitué par la 2, 4, 6- tris (N-1, 4- diméthyl pentyl-p- phénylène diamino) 1, 3, 5 triazine et la N, N' di (1, 4 diméthylpentyl)-p-phénylènediamine.

22. Enveloppe de pneumatique selon la revendication 20 ou 21, **caractérisée en ce que** ledit agent anti-oxydant est la N-(1,3-diméthyl butyl)-N'-phényl-p-phénylènediamine.

23. Procédé de formation d'une pellicule unie et vernissée sur la face externe de l'un au moins des flancs d'une enveloppe de pneumatique, **caractérisé en ce qu'**il consiste à utiliser une enveloppe selon une des revendications précédentes, et à exposer d'une manière statique pendant au moins 48 heures, dans une enceinte maintenue à une température sensiblement égale ou supérieure à 25° C, le ou chaque flanc de ladite enveloppe un environnement d'ozone qui est tel que la concentration d'ozone dosée dans l'air ambiant est sensiblement égale ou supérieure à 20 parties pour cent millions, pour la formation de ladite pellicule avec pour celle-ci une épaisseur obtenue sensiblement égale ou supérieure à 0,5 microns.

24. Procédé selon la revendication 23, **caractérisé en ce qu'**il consiste à utiliser une concentration d'ozone dosée dans l'air ambiant qui est sensiblement égale ou supérieure à 40 parties pour cent millions.

## Patentansprüche

1. Luftreifen mit Seitenprofilen, die eine vulkanisierte Zusammensetzung auf der Basis mindestens eines Elastomers enthalten, **dadurch gekennzeichnet, dass**
die Zusammensetzung in Kombination enthält:
- In einer Menge von 0,3 bis 5 pce ein Polymer, das auf beiden Seiten einer Oxygruppe der Formel ―O― eine Alkylgruppe bzw. mindestens einen Polyalkylenoxidblock der Formel (CₙH₂ₙO)_{z} enthält, der am Ende der Kette so an ein Wasserstoffatom gebunden ist, dass das Wasserstoffatom mit dem endständigen Sauerstoffatom des Polyalkylenoxids eine Alkoholgruppe bildet, und
- in einer Menge von 0,5 bis 10 pce ein Alkalimetallsalz einer Allylsulfonsäure oder Alkylschwefelsäure.

2. Luftreifen nach Anspruch 1, **dadurch gekennzeichnet, dass** das Polymer mit Oxygruppe Polyethylenoxidblöcke und Polypropylenoxidblöcke enthält.

3. Luftreifen nach Anspruch 2, **dadurch gekennzeichnet, dass** das Polymer mit Oxygruppe der folgenden Formel entspricht:
R―O―(C₃H₆O)ₓ―(C₂H₄O)_{y}―H,
wobei R ein Gemisch von Alkylgruppen mit 13 bis 15 Kohlenstoffatomen bedeutet und die Molmasse des Polymers mit Oxygruppe im Bereich von 500 bis 1100 g/Mol liegt.

4. Luftreifen nach Anspruch 3, **dadurch gekennzeichnet, dass** das Polymer mit Oxygruppe so vorliegt, dass x im Bereich von etwa 3 bis 15 und y im Bereich von etwa 3 bis 5 liegt.

5. Luftreifen nach Anspruch 3 oder 4, **dadurch gekennzeichnet, dass** das Polymer mit Oxygruppe eine Molmasse von etwa 670 g/Mol aufweist.

6. Luftreifen nach Anspruch 5, **dadurch gekennzeichnet, dass** das Polymer mit Oxygruppe so vorliegt, dass x 5 oder etwa 5 und y 4 oder etwa 4 bedeutet.

7. Luftreifen nach Anspruch 3 oder 4, **dadurch gekennzeichnet, dass** das Polymer mit Oxygruppe eine Molmasse von etwa 510 g/Mol aufweist.

8. Luftreifen nach Anspruch 7, **dadurch gekennzeichnet, dass** das Polymer mit Oxygruppe so vorliegt, dass x 3 oder etwa 3 und y 3 oder etwa 3 bedeutet.

9. Luftreifen nach Anspruch 3 oder 4, **dadurch gekennzeichnet, dass** das Polymer mit Oxygruppe eine Molmasse von etwa 1050 g/Mol aufweist.

10. Luftreifen nach Anspruch 9, **dadurch gekennzeichnet, dass** das Polymer mit Oxygruppe so vorliegt, dass x 15 oder etwa 15 und y 4 oder etwa 4 bedeutet.

11. Luftreifen nach einem der vorhergehenden Ansprüche, **dadurch gekennzeichnet, dass** das Polymer mit Oxygruppe in der Zusammensetzung in einer Menge von etwa 2 pce vorliegt.

12. Luftreifen nach einem der vorhergehenden Ansprüche, **dadurch gekennzeichnet, dass** das Alkalimetallsalz ein Natriumsalz der folgenden Formel ist:
R'―SO_{z}―Na,
wobei R' ein Gemisch von Alkylgruppen mit 3 bis 17 Kohlenstoffatomen bedeutet und z eine ganze Zahl 3 oder 4 ist.

13. Luftreifen nach Anspruch 12, **dadurch gekennzeichnet, dass** das Salz der Formel R'―SO₃―Na entspricht.

14. Luftreifen nach Anspruch 13, **dadurch gekennzeichnet, dass** R' hauptsächlich 8 Kohlenstoffatome enthält.

15. Luftreifen nach Anspruch 13, **dadurch gekennzeichnet, dass** R' hauptsächlich 15 Kohlenstoffatome aufweist.

16. Luftreifen nach Anspruch 12, **dadurch gekennzeichnet, dass** das Salz der Formel R'―SO₄―Na entspricht.

17. Luftreifen nach Anspruch 16, **dadurch gekennzeichnet, dass** R' hauptsächlich 8 Kohlenstoffatome aufweist.

18. Luftreifen nach Anspruch 16, **dadurch gekennzeichnet, dass** R' hauptsächlich 13 Kohlenstoffatome aufweist.

19. Luftreifen nach einem der vorhergehenden Ansprüche, **dadurch gekennzeichnet, dass** das Salz in der Zusammensetzung in einer Menge von etwa 5 pce vorliegt.

20. Luftreifen nach einem der vorhergehenden Ansprüche, **dadurch gekennzeichnet, dass** die Elastomermischung mindestens ein Ozonschutzmittel und/oder mindestens ein Oxidationsschutzmittel enthält.

21. Luftreifen nach Anspruch 20, **dadurch gekennzeichnet, dass** das Ozonschutzmittel aus der Gruppe 2,4,6-Tris(N-1,4-dimethylpentyl-p-phenylendiamino)-1,3,5-triazin und N,N'-Di(1,4-dimethylpentyl)-p-phenylendiamin stammt.

22. Luftreifen nach Anspruch 20 oder 21, **dadurch gekennzeichnet, dass** das Oxidationsschutzmittel das N-(1,3-Dimethylbutyl)-N'phenyl-p-phenylendiamin ist.

23. Verfahren zur Bildung eines glatten und lackartigen Films auf der Außenseite mindestens eines Seitenprofils eines Luftreifens, **dadurch gekennzeichnet, dass** es darin besteht, einen Reifen nach einem der vorhergehenden Ansprüche zu verwenden und ihn statisch mindestens 48 Stunden in einer Kammer, deren Temperatur mindestens etwa 25° C beträgt, die Flanke oder jede Flanke des Reifens einer Ozonumgebung auszusetzen, die so gewählt ist, dass die in Umgebungsluft gemessene Ozonkonzentration mindestens etwa 20 Teile auf 100 Millionen beträgt, um den Film in einer Dicke von etwa 0,5 µm oder darüber auszubilden.

24. Verfahren nach Ansprüche 23, **dadurch gekennzeichnet, dass** es darin besteht, eine in Umgebungsluft bestimmte Ozonkonzentration einzusetzen, die bei etwa 40 Teilen auf 100 Millionen oder darüber liegt.

## Claims

1. A tyre comprising sidewalls which comprise a vulcanised composition based on at least one elastomer, **characterised in that** said composition comprises, in combination:
- in a quantity of between 0.3 and 5 phr, a polymer comprising, on either side of an oxy radical of the formula -O-, respectively an alkyl group and at least one alkene polyoxide block of the formula (CₙH₂ₙO)_{z} which is joined to a hydrogen atom at the chain end, such that said hydrogen atom forms an alcohol function with the end atom of oxygen of said alkene polyoxide, and
- in a quantity of between 0.5 and 10 phr, an alkali metal salt of an alkylsulphonic or alkylsulphuric acid.

2. A tyre according to Claim 1, **characterised in that** said polymer having an oxy radical comprises polyoxyethylene and polyoxypropylene blocks.

3. A tyre according to Claim 2, **characterised in that** said polymer having an oxy radical corresponds to the formula:
R-O-(C₃H₆O)ₓ-(C₂H₄O)_{y}-H,
in which R is a blend of alkyl groups having from 13 to 15 carbon atoms, the molecular weight of said polymer having an oxy radical being from 500 g/mol to 1100 g/mol.

4. A tyre according to Claim 3, **characterised in that** said polymer having an oxy radical is such that x varies substantially from 3 to 15 and y varies substantially from 3 to 5.

5. A tyre according to Claim 3 or 4, **characterised in that** said polymer having an oxy radical has a molecular weight which is substantially equal to 670 g/mol.

6. A tyre according to Claim 5, **characterised in that** said polymer having an oxy radical is such that x is equal or substantially equal to 5 and y is equal or substantially equal to 4.

7. A tyre according to Claim 3 or 4, **characterised in that** said polymer having an oxy radical has a molecular weight which is substantially equal to 510 g/mol.

8. A tyre according to Claim 7, **characterised in that** said polymer having an oxy radical is such that x is equal or substantially equal to 3 and y is equal or substantially equal to 3.

9. A tyre according to Claim 3 or 4, **characterised in that** said polymer having an oxy radical has a molecular weight which is substantially equal to 1050 g/mol.

10. A tyre according to Claim 9, **characterised in that** said polymer having an oxy radical is such that x is equal or substantially equal to 15 and y is equal or substantially equal to 4.

11. A tyre according to one of the preceding claims, **characterised in that** said polymer having an oxy radical is present in said composition in a quantity substantially equal to 2 phr.

12. A tyre according to one of the preceding claims, **characterised in that** said alkali metal salt is a sodium salt corresponding to the formula:
R'-SO_{z}-Na,
in which R' is a blend of alkyl groups having from 3 to 17 carbon atoms, and z is an integer equal to 3 or 4.

13. A tyre according to Claim 12, **characterised in that** said salt corresponds to the formula R'-SO₃-Na.

14. A tyre according to Claim 13, **characterised in that** R has a majority of 8 carbon atoms.

15. A tyre according to Claim 13, **characterised in that** R' has a majority of 15 carbon atoms.

16. A tyre according to Claim 12, **characterised in that** said salt corresponds to the formula R'-SO₄-Na.

17. A tyre according to Claim 16, **characterised in that** R' has a majority of 8 carbon atoms.

18. A tyre according to Claim 16, **characterised in that** R' has a majority of 13 carbon atoms.

19. A tyre according to one of the preceding claims, **characterised in that** said salt is present in said composition in a quantity substantially equal to 5 phr.

20. A tyre according to one of the preceding claims, **characterised in that** said elastomeric composition comprises at least one antiozonant and/or at least one antioxidant.

21. A tyre according to Claim 20, **characterised in that** said antiozonant belongs to the group consisting of 2,4,6-tris(N-1,4-dimethylpentyl-p-phenylenediamino)-1,3,5-triazine and N,N'-di(1,4-dimethylpentyl)-p-phenylenediamine.

22. A tyre according to Claim 20 or 21, **characterised in that** said antioxidant is N-(1,3-dimethylbutyl)-N'-phenyl-p-phenylenediamine.

23. A process for forming an even varnished film on the outer face of at least one of the sidewalls of a tyre, **characterised in that** it consists in using a tyre according to one of the preceding claims, and exposing, statically for at least 48 hours, in an enclosure kept at a temperature substantially equal to or greater than 25°C, the or each sidewall of said tyre to an ozone environment which is such that the concentration of ozone metered into the ambient air is substantially equal to or greater than 20 parts per 100 million, for forming said film with an obtained thickness of the latter substantially equal to or greater than 0.5 microns.

24. A process according to Claim 23, **characterised in that** it consists in using a concentration of ozone metered into the ambient air which is substantially equal to or greater than 40 parts per 100 million.
